# EUROPÄISCHE PATENTSCHRIFT

(11) **EP 3 098 208 B1**
(45) Veröffentlichungstag und Bekanntmachung des Hinweises auf die Patenterteilung: **03.07.2019**
(21) Anmeldenummer: 15169644.0
(22) Anmeldetag: 28.05.2015
(51) Int. Cl.: C04B 35/12, C04B 35/047, C04B 35/105, C04B 35/622, C04B 35/626, C04B 35/632, C04B 35/66

(54) **VERFAHREN ZUR HERSTELLUNG EINES ROHSTOFFES ZUR HERSTELLUNG VON FEUERFESTEN KERAMISCHEN ERZEUGNISSEN SOWIE EIN ROHSTOFF ZUR HERSTELLUNG VON FEUERFESTEN KERAMISCHEN ERZEUGNISSEN**
METHOD FOR PRODUCING A RAW MATERIAL FOR THE FORMATION OF REFRACTORY CERAMIC PRODUCTS AND A RAW MATERIAL FOR THE PRODUCTION OF FIRE-PROOF CERAMIC PRODUCTS
PROCÉDÉ DE PRODUCTION D'UNE MATIÈRE BRUTE DESTINÉE À LA FABRICATION DE PRODUITS EN CÉRAMIQUE RÉFRACTAIRE ET MATIÈRE BRUTE DESTINÉE À LA PRODUCTION DE PRODUITS EN CÉRAMIQUE IGNIFUGE

(43) Veröffentlichungstag der Anmeldung: 30.11.2016
(73) Patentinhaber: Refractory Intellectual Property GmbH & Co. KG, 1100 Wien (AT)
(72) Erfinder: Budna, Karl, 8010 Graz (AT); Deutsch, Thomas, 8700 Leoben (AT); Neuböck, Rainer, 8010 Graz (AT)
(74) Vertreter: Schweiger, Johannes

(56) Entgegenhaltungen:
- EP-A1- 3 090 992
- US-A- 4 321 149
- US-A1- 2014 011 031
- DATABASE WPI Week 200868 Thomson Scientific, London, GB; AN 2008-L62187 XP002748850, -& JP 2008 231388 A (YAMAMOTO CHEM KK) 2. Oktober 2008 (2008-10-02)
- Y. LEE AND C.L. NASSARALLA: "Minimization of Hexavalent Chromium in Magnesite-Chrome Refractory.", METALLURGICAL AND MATERIALS TRANSACTIONS B, Bd. 28B, 1. Oktober 1997 (1997-10-01), Seiten 855-859, XP002748851,
- "2. Herstellung feuerfsete Werksoffe" In: Gerald Routschka und Harmuth Wuthnow: "Praxisfachbuch Feuerfeste Werksoffe, 5. Auflage.", 14 October 2011 (2011-10-14), Vulkan Verlag ISBN: 978-3-8027-3161-7 pages 15-16, * Seite 16, Tabelle 2.1 *

## Beschreibung

Die Erfindung betrifft ein Verfahren zur Herstellung eines Rohstoffs zur Herstellung von feuerfesten keramischen Erzeugnissen sowie einen Rohstoff zur Herstellung von feuerfesten keramischen Erzeugnissen.

Der Begriff "feuerfestes keramisches Erzeugnis" im Sinne der Erfindung bezeichnet insbesondere keramische Erzeugnisse mit einer Einsatztemperatur von über 600°C und bevorzugt feuerfeste Werkstoffe gemäß DIN 51060, also Werkstoffe mit einem Kegelfallpunkt größer SK17. Die Ermittlung des Kegelfallpunktes kann insbesondere gemäß DIN EN 993-12 erfolgen.

Feuerfeste keramische Erzeugnisse werden insbesondere für Hochtemperaturanwendungen verwendet. Bekannt sind insbesondere auch feuerfeste keramische Erzeugnisse, die Chromoxid umfassen. Solch Chromoxid umfassende feuerfeste keramische Erzeugnisse sind beispielsweise in Form sogenannter Chromkorund-Steine bekannt. Solche Chromkorund-Steine basieren auf Chromoxid (Cr₂O₃) sowie Aluminiumoxid (Al₂O₃). Verwendung finden Chromkorund-Steine beispielsweise in Aggregaten zur Aufnahme und Behandlung von Glasschmelzen.

Während des Einsatzes Chromoxid umfassender feuerfester keramischer Erzeugnisse, beispielsweise von Chromkorund-Steinen, kann im Erzeugnis vorhandenes Chromoxid (insbesondere 3-wertiges Chromoxid "Cr(III)" beziehungsweise Cr³⁺, das insbesondere in Form von Cr₂O₃ vorliegt) zu 6-wertigem Chrom (also "Cr(VI)" beziehungsweise Cr⁶⁺) oxidiert werden. Solch 6-wertiges Chrom kann in den gebrauchten Erzeugnissen anschließend insbesondere in Form von Salzen vorliegen, beispielsweise in Form von Natrium- oder Kaliumchromat. Aufgrund der hohen Toxizität und Kanzerogenität solch 6-wertiger Chromverbindungen bestehen strenge gesetzliche Auflagen für die Behandlung von Produkten, die solch 6-wertiges Chrom beziehungsweise Cr(VI) umfassen. Aus diesem Grund können gebrauchte feuerfeste keramische Erzeugnisse, die Anteile an Cr(VI) umfassen, häufig nicht oder nur beschränkt wiederverwendet werden.

Da es sich bei Chromoxid umfassenden Erzeugnissen, insbesondere beispielsweise Chromkorund-Steinen, um hochwertige Erzeugnisse handelt, besteht jedoch ein dringender Bedarf, gebrauchte Chromoxid umfassende Erzeugnisse, insbesondere Chromkorund-Steine, wieder zu verwenden. Insbesondere besteht der dringende Bedarf, solch gebrauchte, Chromoxid umfassende Erzeugnisse als rezyklierten Rohstoff zur Herstellung von feuerfesten keramischen Erzeugnissen wieder zu verwenden.

Aufgrund der geschilderten Toxizität und Kanzerogenität von Cr(VI), welches gebrauchte, Chromoxid umfassende Erzeugnisse umfassen, können gebrauchte Chromoxid umfassende Erzeugnisse in der Regel jedoch nicht ohne weiteres als rezyklierter Rohstoff zur Herstellung von feuerfesten keramischen Erzeugnissen verwendet werden. Vielmehr müssen solch gebrauchte Chromoxid umfassende Erzeugnisse zunächst behandelt werden, um den Anteil an Cr(VI) in den gebrauchten Erzeugnissen derart zu reduzieren, dass keine gesundheitlichen Bedenken bei deren Verwendung bestehen und gesetzliche Grenzwerte erfüllt sind.

Zur Reduzierung des Anteils an Cr(VI) in gebrauchten, Chromoxid umfassenden Erzeugnissen wurden Verfahren entwickelt, mit deren Hilfe eine Abscheidung oder Reduktion von Cr(VI) in gebrauchten, Chromoxid umfassenden Erzeugnissen möglich ist. Als Reduktionsmittel werden beispielsweise anorganische Verbindungen verwendet, welche zumeist auf 2-wertigen Eisenverbindungen oder sulfidischen Salzen basieren. Ferner ist Ascorbinsäure als Reduktionsmittel bekannt.

Die bekannten Verfahren zur Abscheidung oder Reduktion von Cr(VI) werden regelmäßig als wässrige Verfahren durchgeführt, wobei die gebrauchten, Cr(VI) umfassenden Erzeugnisse sowie das Reduktionsmittel als sehr feines Material in wässriger Umgebung miteinander vermischt werden. Nachteilig an diesen Verfahren ist dabei insbesondere, dass die danach erhaltene Mischung insbesondere aufgrund ihrer hohen Feinheit nicht unmittelbar als Rohstoff zur Herstellung von feuerfesten keramischen Erzeugnissen verwendet werden kann. Nachteilig kann es ferner sein, dass die bei solch wässrigen Verfahren entstehenden Abwässer aufwendig zu behandeln sind, da sich in solchen Abwässern Cr(III)-Salze, die unter umwelttechnischen und gesundheitlichen Aspekten ebenfalls kritisch sind, lösen und solche Verfahren daher in der Regel insgesamt unwirtschaftlich sind.

US 2014/0011031 A1 beschreibt ein Verfahren, bei dem ein Chromoxid umfassendes Produkt in einem flüssigen Medium unter Anwesenheit von Ascorbinsäure auf eine Korngröße mit über 80 % unter 50 µm gemahlen und nach einer sich anschließenden Formgebung zu einem Körper gesintert wird.

Ferner ist es bekannt, Cr(VI) durch Erschmelzen von Cr(VI) umfassenden Erzeugnissen in unkritische Verbindungen zu überführen. Da es hierbei jedoch zum Entweichen staubförmiger Chromverbindungen kommen kann, ist ein solcher Schmelzprozess aus Gründen des Arbeits- und Umweltrechts vielfach nicht möglich. Ferner ist zur Durchführung eines solchen Schmelzprozesses ein hoher Energieeintrag notwendig.

Aus diesen Gründen werden Cr(VI) umfassende Rohstoffe, insbesondere in Form Cr(VI) umfassender, gebrauchter Chromoxid umfassender feuerfester keramischer Erzeugnisse, wie beispielsweise Chromoxid-Steinen, in der Regel nicht wieder verwendet sondern nach ihrem Primärgebrauch einer Deponierung zugeführt.

Der Erfindung liegt die Aufgabe zugrunde, ein Verfahren zur Verfügung zu stellen, durch welches der Gehalt an Cr(VI) in Cr(VI) umfassenden Rohstoffen reduziert werden kann. Insbesondere liegt der Erfindung die Aufgabe zugrunde, ein Verfahren zur Verfügung zu stellen, durch welches der Gehalt an Cr(VI) in Cr(VI) umfassenden, gebrauchten Chromoxid umfassenden feuerfesten keramischen Erzeugnissen reduziert werden kann. Eine weitere Aufgabe der Erfindung besteht darin, ein solches Verfahren zur Verfügung zu stellen, das wirtschaftlich durchführbar ist, und wobei bei der Durchführung des Verfahrens insbesondere nur ein geringer Energieeintrag notwendig ist. Eine weitere Aufgabe der Erfindung besteht darin, ein solches Verfahren zur Verfügung zu stellen, welches unter toxikologischen Gesichtspunkten, insbesondere in arbeitsschutz- und umweltschutztechnischer

Hinsicht unbedenklich durchführbar ist. Eine weitere Aufgabe der Erfindung besteht darin, ein solches Verfahren zur Verfügung zu stellen, durch welches aus dem Cr(VI) umfassenden Rohstoff ein Rohstoff zur Herstellung von feuerfesten keramischen Erzeugnissen herstellbar ist. Insbesondere soll der durch dieses Verfahren hergestellte Rohstoff ohne weiteres zur Herstellung von feuerfesten keramischen Erzeugnissen verwendbar sein.

Zur Lösung dieser Aufgaben wird erfindungsgemäß zur Verfügung gestellt ein Verfahren zur Herstellung eines Rohstoffs zur Herstellung von feuerfesten keramischen Erzeugnissen gemäss Anspruch 1.

Die Erfindung beruht insbesondere auf der Erkenntnis, dass Cr(VI) in Cr(VI) umfassendem Rohstoff in Anwesenheit von Ascorbinsäure und Wasser effektiv reduziert und anschließend wieder unter geringem Energieaufwand getrocknet werden kann, wenn der Cr(VI) umfassende Rohstoff in einer verhältnismäßig groben Körnung vorliegt, insbesondere zu wenigstens 50 Masse-% in einer Korngröße über 50 µm.

Die Erfindung beruht insbesondere auch auf der Erkenntnis, dass das Cr(VI) durch die Ascorbinsäure effektiv auch dann reduzierbar ist, wenn der Cr(VI) umfassende Rohstoff in einer solch groben Korngröße vorliegt. Entgegen der bisher vorherrschenden Meinung muss ein Cr(VI) umfassender Rohstoff damit nicht in einer sehr feinen Körnung, insbesondere nicht mit einer Korngröße überwiegend unter 50 µm vorliegen, um effektiv durch Ascorbinsäure reduziert werden zu können. Auf Basis dieser Erkenntnis stellte sich erfindungsgemäße ferner heraus, dass der in der erfindungsgemäß groben Körnung vorliegende, Cr(VI) umfassende Rohstoff unter einem wesentlich geringeren Energieaufwand getrocknet werden kann als ein in einer sehr feinen Körnung, insbesondere in einer Korngröße überwiegend unter 50 µm vorliegender Rohstoff gemäß dem Stand der Technik. Ein weiterer Vorteil besteht darin, dass für die Durchführung des erfindungsgemäßen Verfahrens keine Energie aufgewandt werden muss, um den Cr(VI) umfassenden Rohstoffs derart zu zerkleinern, dass er für die Durchführung des Verfahrens zur Reduzierung seines Anteils an Cr(VI) in einer Korngröße überwiegend unter 50 µm zur Verfügung gestellt werden muss oder während der Durchführung des Verfahrens auf eine solche Korngröße zerkleinert werden muss. Schließlich hat sich herausgestellt, dass bei der Behandlung von Cr(VI) umfassenden Rohstoffen durch das erfindungsgemäße Verfahren ein wesentlich geringerer Aufwand zur Behandlung dabei anfallender Abwässer zu betreiben ist, da sich aufgrund der groben Körnung der Cr(VI) umfassenden Rohstoffe nur geringe Anteile an Cr(III)-Salzen im Wasser lösen und entstehende Abwässer daher wesentlich einfacher zu behandeln sind als die bei Verfahren nach dem Stand der Technik entstehenden Abwässer.

Insgesamt erlaubt das erfindungsgemäße Verfahren daher eine wirtschaftliche und gleichzeitig technisch effektive Reduzierung des Anteils an Cr(VI) in Cr(VI) umfassenden Rohstoffen.

Gemäß dem erfindungsgemäßen Verfahren werden zunächst ein Cr(VI) umfassender Rohstoff, Ascorbinsäure und Wasser zur Verfügung gestellt, zusammengeführt und anschließend zu einer Mischung vermischt. Schließlich wird die Mischung getrocknet.

Während des Zusammenführens und Vermischens des Cr(VI) umfassenden Rohstoffs mit der Ascorbinsäure wird Cr(VI) durch die Ascorbinsäure reduziert und dabei insbesondere in eine toxikologisch unbedenkliche Oxidationsstufe beziehungsweise zu toxikologisch unbedenklichen Chromverbindungen reduziert. Entscheidend für den Erfolg des erfindungsgemäßen Verfahrens ist dabei insbesondere, dass der Cr(VI) umfassende Rohstoff während der Durchführung des Verfahrens hinsichtlich seiner Korngröße nicht oder nicht wesentlich verändert wird, also insbesondere während des Zusammenführens und Vermischens mit der Ascorbinsäure und dem Wasser und dem anschließenden Trocknen nicht zerkleinert wird. Die Korngröße des für die Durchführung des Verfahrens zur Verfügung gestellten, Cr(VI) umfassenden Rohstoffs entspricht damit auch vollständig oder im Wesentlichen der Korngröße dieses Rohstoffes nach seiner Behandlung gemäß dem erfindungsgemäßen Verfahren.

Der für das erfindungsgemäße Verfahren zur Verfügung gestellte, Cr(VI) umfassende Rohstoff liegt als Schüttgut vor, also als körniges Gemenge beziehungsweise als Gemenge aus Körnern. Erfindungsgemäß liegen die Körner des für das erfindungsgemäße Verfahren zur Verfügung gestellten, Cr(VI) umfassenden Rohstoffs zu wenigstens 50 Masse-% in einer Korngröße über 50 µm vor, also beispielsweise auch zu wenigstens 50, 60, 70, 80 oder 90 Masse-% in einer Korngröße über 50 µm, 63 µm, 100 µm, 200 µm, 350 µm, 500 µm, 1,0 mm oder 2,0 mm. Die vorstehenden Angaben in Masse-% sind jeweils bezogen auf die Gesamtmasse des Cr(VI) umfassenden Rohstoffs.

Ferner liegt der Cr(VI) umfassende Rohstoff bevorzugt vollständig oder weitgehend in einer Korngröße nicht über 10 mm vor, also beispielsweise zu 100 Masse-% oder zu wenigstens 90 Masse-% in einer Korngröße nicht über 10, 9, 8, 7, 6 oder 5 mm. Die vorstehenden Angaben in Masse-% sind jeweils wiederum bezogen auf die Gesamtmasse des Cr(VI) umfassenden Rohstoffes.

Wie ausgeführt, wird das erfindungsgemäße Verfahren derart durchgeführt, dass sich die Korngröße des Cr(VI) umfassenden Rohstoffs während der Durchführung des Verfahrens nicht oder nicht wesentlich verändert. Insbesondere ist erfindungsgemäß insoweit vorgesehen, dass der Cr(VI) umfassende Rohstoff während der Durchführung des erfindungsgemäßen Verfahrens - also insbesondere während des Zusammenführens und Vermischens mit Ascorbinsäure und Wasser und während des anschließenden Trocknens - eine Korngröße aufweist, wie sie vorstehend ausgeführt ist, also eine Korngröße, wie sie der für das erfindungsgemäße Verfahrens zur Verfügung gestellte, Cr(VI) umfassende Rohstoff aufweisen kann. Soweit sich die Korngröße des Cr(VI) umfassenden Rohstoffs während der Durchführung des Verfahrens nicht verändert, entspricht die Korngröße des durch das erfindungsgemäße Verfahren behandelten, Cr(VI) umfassenden Rohstoffs der Korngröße des ursprünglich für das erfindungsgemäße Verfahren zur Verfügung gestellten Cr(VI) umfassenden Rohstoffs. Soweit sich die Korngröße des Cr(VI) umfassenden Rohstoffs durch seine Behandlung gemäß dem erfindungsgemäßen Verfahren nicht wesentlich verändert, kann sich die Korngröße des ursprünglich für das erfindungsgemäße Verfahren zur Verfügung gestellten, Cr(VI) umfassenden Rohstoffs während der Durchführung des Verfahrens zwar verändern, jedoch liegt der Cr(VI) umfassende Rohstoff auch nach seiner Behandlung durch das erfindungsgemäße Verfahren in einer Korngröße vor, die der für das erfindungsgemäße Verfahren zur Verfügung gestellte, Cr(VI) umfassende Rohstoff wie vorstehend ausgeführt aufweisen kann.

Die hierin gemachten Angaben zur Korngröße sind bestimmt gemäß DIN 66165-1:1987-04 und DIN 66165-2:1987-04.

Bei dem Cr(VI) umfassenden Rohstoff kann es sich um einen einzigen Rohstoff oder einen Rohstoff in Form einer Rohstoffmischung handeln, also einen Rohstoff aus Komponenten unterschiedlicher Herkunft und/oder Zusammensetzung. Insbesondere kann der Cr(VI) umfassende Rohstoff einen oder mehrere gebrauchte Chromoxid umfassende feuerfeste keramische Erzeugnisse umfassen. Unter einem "gebrauchten" Chromoxid umfassenden, feuerfesten keramischen Erzeugnis wird hierin ein Chromoxid umfassendes, feuerfestes keramisches Erzeugnis verstanden, das bereits für seinen ursprünglichen Gebrauchszweck verwendet worden ist. Insbesondere kann der für die Durchführung des erfindungsgemäßen Verfahrens zur Verfügung gestellte, Cr(VI) umfassende Rohstoff beispielsweise entweder (i) einen Rohstoff auf Basis gebrauchter Chromkorund-Steine umfassen oder aus gebrauchten Chromkorund-Steinen bestehen und/oder (ii) einen Rohstoff auf Basis gebrauchter Magnesiachromit-Steine umfassen oder aus gebrauchten Magnesiachromit-Steinen bestehen. Bei gebrauchten Chromkorund-Steinen kann es sich beispielsweise um Chromkorund-Steine handeln, die bereits für ihren ursprünglich Gebrauchszweck, beispielsweise die Zustellung von Aggregaten zur Aufnahme und Behandlung von Glasschmelzen verwendet worden sind. Bei gebrauchten Magnesiachromit-Steinen kann es sich beispielsweise um Magnesiachromit-Steine handeln, die bereits für ihren ursprünglich Gebrauchszweck, beispielsweise die Zustellung von Aggregaten zur Aufnahme und Behandlung von Eisen-, Stahl- und Nichteisenmetallschmelzen, die Zustellung von Zementdrehrohröfen oder in Regenerativkammern von Glasschmelzöfen verwendet worden sind.

Um gebrauchte Chromoxid umfassende feuerfeste keramische Erzeugnisse, insbesondere also beispielsweise Chromkorund- und/oder Magnesiachromit-Steine, für die Durchführung des erfindungsgemäßen Verfahrens als Cr(VI) umfassenden Rohstoff zur Verfügung zu stellen, können diese Erzeugnisse zerkleinert werden und anschließend als Cr(VI) umfassende Rohstoffe für die Durchführung des erfindungsgemäßen Verfahren zur Verfügung gestellt werden. Nach ihrer Zerkleinerung können die Erzeugnisse hinsichtlich ihrer Korngröße gegebenenfalls derart aufbereitet werden, dass diese eine wie vorstehend ausgeführte Korngröße des für die Durchführung des erfindungsgemäßen Verfahrens zur Verfügung gestellten, Cr(VI) umfassenden Rohstoffs aufweisen.

Der Anteil an Cr(VI) in dem für die Durchführung des erfindungsgemäßen Verfahrens zur Verfügung gestellten, Cr(VI) umfassenden Rohstoff ist grundsätzlich beliebig. Insbesondere kann der Gehalt an Cr(VI) in dem Cr(VI) umfassenden, für die Durchführung des erfindungsgemäßen Verfahrens zur Verfügung gestellten Rohstoff oberhalb eines toxikologisch bedenklichen Anteils liegen, beispielsweise oberhalb 500 ppm oder oberhalb 1.000 ppm.

Grundsätzlich kann der Anteil an Cr(VI) in dem für das Verfahren zur Verfügung gestellten, Cr(VI) umfassenden Rohstoff jedoch auch deutlich oberhalb dieser Anteile liegen, also beispielsweise auch oberhalb 1.500, 2.000, 3.000, 4.000 oder 5.000 ppm. Beispielsweise kann der Anteil an Cr(VI) in dem Cr(VI) umfassenden Rohstoff bei bis zu 10.000 ppm oder auch darüber liegen.

Die hierin gemachten Angaben zu Anteilen an Cr(VI) sind bestimmt gemäß DIN EN 15192:2007-02.

Bei dem Cr(VI) umfassenden Rohstoff, der für die Durchführung des erfindungsgemäßen Verfahrens zur Verfügung gestellt wird, kann es sich beispielsweise um einen Rohstoff auf Basis von Chromkorund handeln, also einen Rohstoff auf Basis von Chromoxid (Cr₂O₃) und Aluminiumoxid (Al₂O₃). Insbesondere kann es sich bei dem Cr(VI) umfassenden Rohstoff, wie zuvor ausgeführt, um einen Rohstoff auf Basis von Chromkorund in Form von Chromkorund-Steinen, insbesondere gebrauchten Chromkorund-Steinen handeln. Beispielsweise kann der für die Durchführung des erfindungsgemäßen Verfahrens zur Verfügung gestellte, Cr(VI) umfassende Rohstoff eine Gesamtmasse an Chromoxid und Aluminiumoxid von wenigstens 90 Masse-% aufweisen, also beispielsweise auch von wenigstens 93, 95, 96, 97 oder 98 Masse-%. Beispielsweise kann der Anteil an Chromoxid in dem Cr(VI) umfassenden Rohstoff bei wenigstens 10 oder 15 Masse-% und beispielsweise bei höchstens 90, 80, 70, 60, 50, 40, 30 oder 25 Masse-% liegen. Der Anteil an Aluminiumoxid in dem Cr(VI) umfassenden Rohstoff kann beispielsweise bei wenigstens 10, 20, 30, 40, 50, 60 oder 70 Masse-% und beispielsweise bei höchstens 90, 85 oder 80 Masse-% liegen. Die vorstehenden Angaben in Masse-% sind jeweils bezogen auf die Gesamtmasse des Cr(VI) umfassenden Rohstoffs, insbesondere eines Rohstoffs auf Basis von Chromkorund.

Bei dem Cr(VI) umfassenden Rohstoff, der für die Durchführung des erfindungsgemäßen Verfahrens zur Verfügung gestellt wird, kann es sich alternativ oder kumulativ beispielsweise um einen Rohstoff auf Basis von Magnesiachromit handeln, also einem Rohstoff auf Basis von Chromoxid (Cr₂O₃) und Magnesiumoxid beziehungsweise Magnesia (MgO). Insbesondere kann es sich bei dem Cr(VI) umfassenden Rohstoff, wie zuvor ausgeführt, um einen Rohstoff auf Basis von Magnesiachromit in Form von Magnesiachromit-Steinen, insbesondere gebrauchten Magnesiachromit-Steinen handeln. Beispielsweise kann der für die Durchführung des erfindungsgemäßen Verfahrens zur Verfügung gestellte, Cr(VI) umfassende Rohstoff eine Gesamtmasse an Chromoxid und Magnesiumoxid von wenigstens 70 Masse-% aufweisen, also beispielsweise auch von wenigstens 71, 72, 73, 74, 75, 76 oder 77 Masse-%. Beispielsweise kann der Anteil an Chromoxid in dem Cr(VI) umfassenden Rohstoff bei wenigstens 5, 10 oder 15 Masse-% und beispielsweise bei höchstens 40, 35, 30, 29, 28, 27 oder 26 Masse-% liegen. Der Anteil an Magnesiumoxid in dem Cr(VI) umfassenden Rohstoff kann beispielsweise bei wenigstens 40, 50, 55, 56 oder 57 Masse-% und beispielsweise bei höchstens 85, 80, 75, 70, 69, 68, 67 oder 66 Masse-% liegen. Der Anteil an Fe₂O₃ in dem Cr(VI) umfassenden Rohstoff kann beispielsweise im Bereich von 5 bis 20 Masse-% liegen. Der Anteil an Al₂O₃ in dem Cr(VI) umfassenden Rohstoff kann beispielsweise im Bereich von 2 bis 10 Masse-% liegen Die vorstehenden Angaben in Masse-% sind jeweils bezogen auf die Gesamtmasse des Cr(VI) umfassenden Rohstoffs, insbesondere eines Rohstoffs auf Basis von Magnesiachromit.

Alternativ kann ein für die Durchführung des erfindungsgemäßen Verfahrens zur Verfügung gestellter, Cr(VI) umfassende Rohstoff eine Gesamtmasse an Chromoxid, Magnesiumoxid und Aluminiumoxid von wenigstens 70 Masse-% aufweisen, also beispielsweise auch von wenigstens 75, 80 oder 90 Masse-%. Beispielsweise kann der Anteil an Chromoxid in einem solchen Cr(VI) umfassenden Rohstoff bei wenigstens 10 oder 15 Masse-% und beispielsweise bei höchstens 30 oder 25 Masse-% liegen. Beispielsweise kann der Anteil an Aluminiumoxid in einem solchen Cr(VI) umfassenden Rohstoff bei wenigstens 5 oder 10 Masse-% und beispielsweise bei höchstens 80 oder 70 Masse-% liegen. Beispielsweise kann der Anteil an Magnesiumoxid in einem solchen Cr(VI) umfassenden Rohstoff im Bereich von 0 bis 65 Masse-% liegen. Bei einem solchen, Cr(VI) umfassenden Rohstoff, der für die Durchführung des erfindungsgemäßen Verfahrens zur Verfügung gestellt wird, kann es sich insbesondere beispielsweise um eine Mischung von Rohstoffen auf Basis von Chromkorund und Magnesiachromit handeln, wobei diese Rohstoffe insbesondere wie vorstehend ausgeführt zusammengesetzt sein können. Die vorstehenden Angaben in Masse-% sind jeweils bezogen auf die Gesamtmasse des Cr(VI) umfassenden Rohstoffs, insbesondere eines Rohstoffs auf Basis von Chromkorund und Magnesiachromit.

Die Ascorbinsäure kann für die Durchführung des erfindungsgemäßen Verfahrens grundsätzlich in beliebiger Form zur Verfügung gestellt werden, beispielsweise in wenigstens einer der folgenden Formen: Als Schüttgut oder als Lösung.

Soweit die Ascorbinsäure für die Durchführung des erfindungsgemäßen Verfahrens als Schüttgut zur Verfügung gestellt wird, kann die Ascorbinsäure beispielsweise in Form von Granalien vorliegen, also in einer zu Körnern granulierten Form. Beispielsweise kann Ascorbinsäure, soweit sie in Form von Schüttgut, insbesondere in Form von Granalien zur Verfügung gestellt wird, zu wenigstens 80, 90 oder 100 Masse-% in einer Korngröße von wenigstens 0,1 mm, 0,5 mm oder 1,0 mm und beispielsweise in einer Korngröße von höchstens 10, 9, 8, 7 oder 6 mm, jeweils bezogen auf die Gesamtmasse an Ascorbinsäure in Form von Schüttgut, vorliegen. Der Vorteil von mit einer entsprechenden Korngröße zur Verfügung gestellten Ascorbinsäure liegt insbesondere in deren guter Handhabbarkeit.

Soweit die Ascorbinsäure für die Durchführung des erfindungsgemäßen Verfahrens in Form einer Lösung zur Verfügung gestellt wird, kann diese insbesondere in Form einer wässrigen Lösung zur Verfügung gestellt werden, beispielsweise in Form einer 5 bis 50 %-igen wässrigen Lösung, also beispielsweise auch in Form einer 10 bis 30 %-igen wässrigen Lösung.

Das Wasser kann für die Durchführung des erfindungsgemäßen Verfahrens beispielsweise in reiner Form zur Verfügung gestellt werden. Beispielsweise kann das Wasser jedoch auch teilweise oder vollständig als Bestandteil einer wässrigen Ascorbinsäurelösung für die Durchführung des erfindungsgemäßen Verfahrens zur Verfügung gestellt werden.

Während des Zusammenführens des Cr(VI) umfassenden Rohstoffes mit der Ascorbinsäure und Wasser und dem anschließenden Vermischen reduziert die Ascorbinsäure Cr(VI) des Cr(VI) umfassenden Rohstoffes insbesondere zu 3-wertigem Chrom, also Cr(III). Diese Reaktion lässt sich vereinfacht wie folgt darstellen:

2 Cr(VI) + 3 AscH₂ → 2 Cr(III) + 3 DHA

mit

| | |
|---|---|
| Cr(VI): | 6-wertiges Chrom |
| AscH₂: | Ascorbinsäure |
| Cr(III): | 3-wertiges Chrom |
| DHA: | Dehydroascorbinsäure. |

Stöchiometrisch werden für die vollständige Reduktion von 2 Mol 6-wertigem Chrom zu 2 Mol 3-wertigem Chrom also 3 Mol Ascorbinsäure benötigt.

Bevorzugt wird für die Durchführung des erfindungsgemäßen Verfahrens Ascorbinsäure wenigstens in einem solchen Anteil zur Verfügung gestellt, dass stöchiometrisch eine vollständige Reduktion des Cr(VI) in dem Cr(VI) umfassenden Rohstoff zu Cr(III) erfolgen kann. Demnach kann Ascorbinsäure beispielsweise in einem solchen Anteil zur Verfügung gestellt werden, dass das Molverhältnis von Ascorbinsäure zu Cr(VI) in dem Cr(VI) umfassenden Rohstoff bei wenigstens 1,5 liegt, also beispielsweise im Bereich von 1,5 bis 3, im Bereich von 1,5 bis 2,5, im Bereich von 1,5 bis 2 oder im Bereich von 1,5 bis 1,8.

Wasser wird für die Durchführung des erfindungsgemäßen Verfahrens bevorzugt in einem solchen Anteil zur Verfügung gestellt, dass der mit Ascorbinsäure und Wasser vermischte, Cr(VI) umfassende Rohstoff eine feuchte, jedoch noch krümelige Konsistenz aufweist. Erfindungsgemäß hat sich herausgestellt, dass dies bei der erfindungsgemäßen Korngröße des Cr(VI) umfassenden Rohstoffes möglich ist, wenn Wasser in einem Massenanteil im Bereich von 1 bis 10 Masse-% zur Verfügung gestellt wird, bezogen auf die Gesamtmasse des für die Durchführung des erfindungsgemäßen Verfahrens zur Verfügung gestellten, Cr(VI) umfassenden Rohstoffes. Demnach kann Wasser beispielsweise auch in einem Anteil von maximal 9, 8, 7 oder 6 Masse-% zur Verfügung gestellt werden.

Bei der Durchführung des erfindungsgemäßen Verfahrens können der Cr(VI) umfassende Rohstoff, die Ascorbinsäure und das Wasser jeweils einzeln oder auch in Kombination zusammengeführt werden. Beispielsweise können der Cr(VI) umfassende Rohstoff und Wasser zunächst zusammengeführt und anschließend mit der Ascorbinsäure zusammengeführt werden. Alternativ können beispielsweise auch der Cr(VI) umfassende Rohstoff und die Ascorbinsäure zunächst kombiniert und anschließend mit dem Wasser zusammengeführt werden.

Erfindungsgemäß wurde festgestellt, dass bei der Durchführung des erfindungsgemäßen Verfahrens die Reduktion des Cr(VI) zu Cr(III) sowie die für die Trocknung des mit Ascorbinsäure und Wasser gemischten, Cr(VI) umfassenden Rohstoffs benötigte Zeit sensibel auf weitere Komponenten reagieren können, die neben dem Cr(VI) umfassendem Rohstoff, der Ascorbinsäure und Wasser bei der Durchführung des erfindungsgemäßen Verfahrens vorliegen. Insofern kann erfindungsgemäß vorgesehen sein, dass bei der Durchführung des erfindungsgemäßen Verfahrens der Cr(VI) umfassende Rohstoff neben Ascorbinsäure und Wasser mit keinen weiteren Komponenten zusammengeführt, vermischt und getrocknet wird. Bevorzugt wird der Cr(VI) umfassende Rohstoff bei seiner Behandlung durch das erfindungsgemäße Verfahren mit solch weiteren Komponenten allenfalls in Anteilen unter 5 Masse-% zusammengeführt, also beispielsweise auch in Anteilen unter 4, 3, 2 oder unter 1 Masse-%, bezogen auf die Gesamtmasse an Cr(VI) umfassendem Rohstoff.

Der Cr(VI) umfassende Rohstoff kann mit dem der Ascorbinsäure und dem Wasser beispielsweise in einem Mischer, in dem diese Komponenten später miteinander vermischt werden können, zusammengeführt werden. Erfindungsgemäß hat sich dabei herausgestellt, dass es für die Reduktion des Cr(VI) in dem Cr(VI) umfassenden Rohstoff durch die Ascorbinsäure vorteilhaft sein kann, soweit die Komponenten dem Mischer chargenweise zugegeben werden.

Der, beispielsweise in einem Mischer, mit Ascorbinsäure und Wasser zusammengeführte, Cr(VI) umfassende Rohstoff wird mit diesen Komponenten gemischt, insbesondere in einem Mischer, beispielsweise in dem Mischer, in dem die Komponenten zusammengeführt worden sind. Beispielsweise kann als Mischer zum Vermischen der Komponenten ein Trommelmischer verwendet werden.

Der Cr(VI) umfassende Rohstoff wird mit der Ascorbinsäure und dem Wasser für eine Dauer von beispielsweise wenigstens 5 Minuten und beispielsweise höchstens 60 Minuten gemischt, also beispielsweise auch für wenigstens 10 Minuten oder für beispielsweise höchstens 30, 25, 20, 18 oder 15 Minuten.

Das Zusammenführen und Mischen des Cr(VI) umfassenden Rohstoffs mit Ascorbinsäure und Wasser kann bei dem erfindungsgemäßen Verfahren insbesondere bei Umgebungsbedingungen durchgeführt werden, also beispielsweise bei Temperaturen über 0°C und unter 30°C.

Nachdem der Cr(VI) umfassende Rohstoff mit Ascorbinsäure und Wasser vermischt ist, wird der Cr(VI) umfassende Rohstoff getrocknet. Hierzu kann der Cr(VI) umfassende Rohstoff beispielsweise in einen Trockner überführt werden, beispielsweise in einen Trommeltrockner.

Der Cr(VI) umfassende Rohstoff kann beispielsweise bei einer Temperatur im Bereich von 100 bis 200°C, also beispielsweise auch bei einer Temperatur von wenigstens 110, 120 oder 130°C und beispielsweise bei einer Temperatur von höchstens 190, 180 oder 170°C getrocknet werden. Der Trockner kann gasbetrieben, beispielsweise erdgasbetrieben sein.

Der Cr(VI) umfassende Rohstoff wird bevorzugt für eine Dauer von unter 3 Stunden getrocknet, also beispielsweise auch für eine Dauer unter 2,5 oder unter 2 oder unter 1,5 Stunden und beispielsweise für eine Dauer von wenigstens 0,5 oder 1 oder 1,5 Stunden.

Bevorzugt wird der Cr(VI) umfassende Rohstoff auf eine Restfeuchte im Bereich von 0 bis 1,5 Masse-% Wasser getrocknet, bezogen auf die Gesamtmasse des Cr(VI) umfassenden Rohstoffs nach dem Trocknen, also beispielsweise auf eine Restfeuchte von wenigstens 0,05 oder 0,1 Masse-% und beispielsweise auf eine Restfeuchte von höchstens 1 oder 0,5 Masse-%.

Nach der Trocknung liegt der ursprünglich für die Durchführung des erfindungsgemäßen Verfahrens zur Verfügung gestellte, nunmehr durch das erfindungsgemäße Verfahren behandelte, Cr(VI) umfassende Rohstoff mit einer nicht oder nicht wesentlich veränderten Korngröße wie der ursprünglich für die Durchführung des erfindungsgemäßen Verfahrens zur Verfügung gestellte, Cr(VI) umfassende Rohstoff vor, jedoch mit einem reduzierten Anteil an Cr(VI). In jedem Fall weist der durch das erfindungsgemäße Verfahren behandelte, Cr(VI) umfassende Rohstoff eine Korngröße auf, die ein ursprünglich für das erfindungsgemäße Verfahren zur Verfügung gestellter, Cr(VI) umfassender Rohstoff wie vorstehend ausgeführt aufweisen kann. Die chemische Zusammensetzung des durch das erfindungsgemäße Verfahren behandelten, Cr(VI) umfassenden Rohstoffs entspricht im wesentlichen der chemischen Zusammensetzung des ursprünglich für das Verfahren zur Verfügung gestellten, Cr(VI) umfassenden Rohstoffs, wobei der behandelte Rohstoff ferner Oxalsäure als Abbauprodukt der Ascorbinsäure sowie gegebenenfalls noch Anteile an Ascorbinsäure sowie Chrom-Ascorbat-Komplexen enthalten kann.

Der Anteil an Cr(VI) in dem durch das erfindungsgemäße Verfahren behandelten, Cr(VI) umfassenden Rohstoff kann auf einen Gehalt unter 500 ppm reduziert werden. So kann der durch das erfindungsgemäße Verfahren behandelte, Cr(VI) umfassende Rohstoff einen Gehalt an Cr(VI) von unter 500 ppm aufweisen, also beispielsweise auch von unter 400 oder unter 300 ppm.

Der durch das erfindungsgemäße Verfahren behandelte, Cr(VI) umfassende Rohstoff kann zur Herstellung von feuerfesten keramischen Erzeugnissen zur Verfügung gestellt werden. Besonders vorteilhaft ist dabei, dass der durch das erfindungsgemäße Verfahren behandelte, Cr(VI) umfassende Rohstoff aufgrund der erfindungsgemäßen Korngröße unmittelbar, also ohne weitere Behandlung oder Aufbereitung, als Rohstoff zur Herstellung von feuerfesten keramischen Erzeugnissen zur Verfügung gestellt werden kann.

Gegenstand der Erfindung ist auch ein durch das erfindungsgemäße Verfahren behandelter, Cr(VI) umfassender Rohstoff.

Soweit für die Durchführung des erfindungsgemäßen Verfahrens ein Cr(VI) umfassender Rohstoff in Form von gebrauchten Chromkorund-Steinen und/oder gebrauchten Magnesiachromit-Steinen zur Verfügung gestellt wird, kann dieser, durch das erfindungsgemäße Verfahren behandelte, Cr(VI) umfassende Rohstoff insbesondere die Oxide Aluminiumoxid, Magnesiumoxid und Chromoxid umfassen. Ferner umfasst ein solcher Rohstoff Oxalsäure als Abbauprodukt der Ascorbinsäure Neben Al₂O₃, MgO und Cr₂O₃ und Oxalsäure kann dieser Rohstoff gegebenenfalls schließlich noch Anteile an Ascorbinsäure sowie Chrom-Ascorbat-Komplexen enthalten.

Gegenstand der Erfindung ist auch ein Cr(VI) umfassender Rohstoff, insbesondere ein durch das erfindungsgemäße Verfahren behandelter, Cr(VI) umfassender Rohstoff, zur Herstellung von feuerfesten keramischen Erzeugnissen, umfassend
- Cr₂O₃; und
- wenigstens eines der Oxide Al₂O₃ oder MgO;
- Oxalsäure; und
- Cr(VI); wobei
- der Gehalt an Cr(VI) in dem Rohstoff unter 500 ppm liegt,
- der Feuchtigkeitsgehalt unter 1,5 Masse-% liegt und
- der Rohstoff zu wenigstens 50 Masse-% in einer Korngröße über 50 µm vorliegt, wobei der Rohstoff ferner Oxalsäure umfasst.

Der Rohstoff kann in der Korngröße vorliegen, in der der für die Durchführung des erfindungsgemäßen Verfahrens zur Verfügung gestellte, Cr(VI) umfassende Rohstoff vorliegen kann.

Die Anteile an Cr₂O₃, Al₂O₃ und MgO in dem Rohstoff können in den Anteilen vorliegen, in denen sie in einem für die Durchführung des erfindungsgemäßen Verfahrens zur Verfügung gestellten, Cr(VI) umfassenden Rohstoff vorliegen können.

Der Gehalt an Cr(VI) in dem Rohstoff sowie dessen Feuchtigkeitsgehalt können im Übrigen den oben angegebenen Gehalten in einem durch das erfindungsgemäße Verfahren behandelten, Cr(VI) umfassenden Rohstoff entsprechen. Insofern kann der erfindungsgemäße, Cr(VI) umfassende Rohstoff beispielsweise einen Anteil an Cr(VI) unter 500 ppm, also beispielsweise auch unter 400, 300, 200 oder 100 ppm aufweisen. Ferner kann der erfindungsgemäße, Cr(VI) umfassende Rohstoff beispielsweise einen Anteil an Cr(VI) über 10 ppm, also beispielsweise auch über 50 ppm oder über 100 ppm aufweisen. Die vorgemachten Angaben sind jeweils bezogen auf die Gesamtmasse des erfindungsgemäßen, Cr(VI) umfassende Rohstoffs, insbesondere auch soweit dieser in Form eines durch das erfindungsgemäße Verfahren behandelten, Cr(VI) umfassenden Rohstoffs vorliegt.

Neben Cr₂O₃, Al₂O₃, MgO und Oxalsäure kann der erfindungsgemäße Rohstoff gegebenenfalls noch Anteile an Fe₂O₃, Ascorbinsäure sowie Chrom-Ascorbat-Komplexen enthalten.

Neben Anteilen Cr₂O₃, Al₂O₃, MgO, Fe₂O₃, Oxalsäure, Cr(VI), Ascorbinsäure und Chrom-Ascorbat-Komplexen weist der erfindungsgemäße, Cr(VI) umfassende Rohstoff keine weiteren Komponenten oder gegebenenfalls nur weitere Komponenten in einem geringen Umfang auf, beispielsweise in einem Anteil unter 10 Masse-%, also beispielsweise auch in einem Anteil unter 5, 4, 3, 2 oder 1 Masse-%, jeweils bezogen auf die Gesamtmasse des erfindungsgemäßen Rohstoffes.

Weitere Merkmale der Erfindung ergeben sich aus den Ansprüchen, den Figuren und der zugehörigen Figurenbeschreibung.

Sämtliche Merkmale der Erfindung können, einzeln oder in Kombination, beliebig miteinander kombiniert sein.

Ein Ausführungsbeispiel der Erfindung wird nachfolgend erläutert.

Gemäß dem Ausführungsbeispiel wurden für die Durchführung des erfindungsgemäßen Verfahrens ein Cr(VI) umfassender Rohstoff, eine wässrige Ascorbinsäurelösung sowie ein Ascorbinsäuregranulat zur Verfügung gestellt.

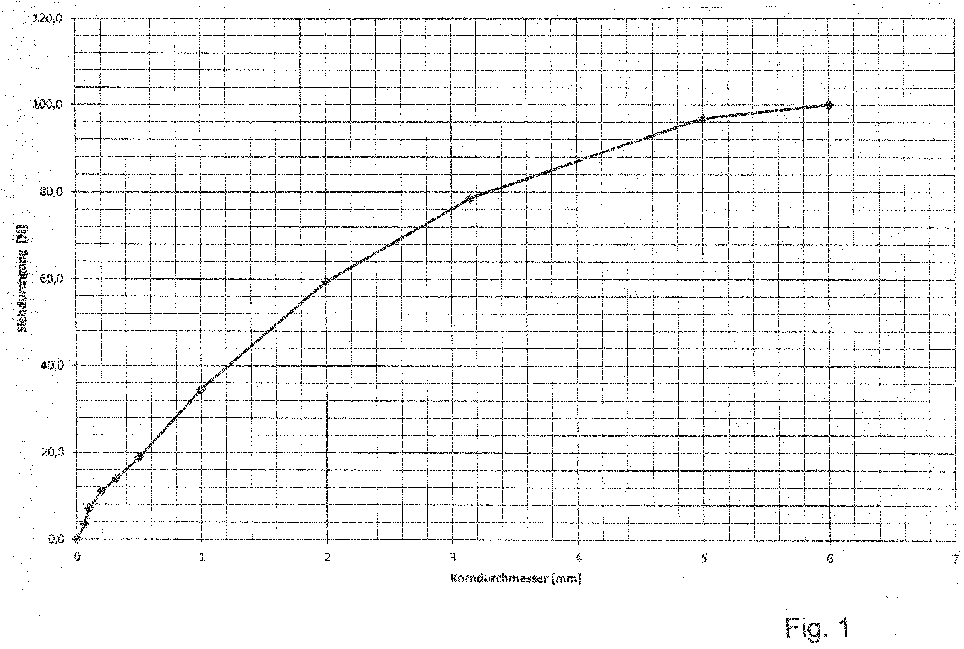

Der zur Verfügung gestellte, Cr(VI) umfassende Rohstoff lag in Form von gebrauchten, zerkleinerten Chromkorund-Steinen vor. Der Cr(VI) umfassende Rohstoff bestand aus etwa 78,8 Masse-% Aluminiumoxid, 19,8 Masse-% Chromoxid und im Übrigen weiteren Oxiden, insbesondere ZrO₂, Na₂O, SiO₂ und MgO. Der Gesamtgehalt an Cr(VI) des Cr(VI) umfassenden Rohstoffs betrug etwa 4.000 ppm. Der entsprechend für die Durchführung des erfindungsgemäßen Verfahrens zur Verfügung gestellte, Cr(VI) umfassende Rohstoff lag als Schüttgut vor, wobei etwa 97 Masse-% in einer Körnung über 50 µm vorlagen. Die Siebkurve des Rohstoffs ist in Figur 1 angegeben.

Die für die Durchführung des erfindungsgemäßen Verfahrens zur Verfügung gestellte Ascorbinsäure lag zum einen in fester Form als Granulat und zum anderen in Form einer wässrigen Lösung vor. Das Ascorbinsäuregranulat bestand aus Granalien einer Korngröße im Bereich von 2 bis 3 mm. Die wässrige Ascorbinsäurelösung lag in Form einer 15 %-igen wässrigen Lösung vor. Das Masseverhältnis von Ascorbinsäuregranulat zu wässriger Ascorbinsäurelösung betrug etwa 1:0,3. Die Gesamtmasse an Ascorbinsäure im Granulat und in der wässrigen Lösung lag in einem solchen Anteil vor, dass das Verhältnis der Molmasse der für die Durchführung des erfindungsgemäßen Verfahrens zur Verfügung gestellten Ascorbinsäure zur Molmasse des Cr(VI) in dem für die Durchführung des erfindungsgemäßen Verfahrens zur Verfügung gestellten, Cr(VI) umfassenden Rohstoffes bei etwa 1,5 lag.

Gleichzeitig ergab sich dabei ein Massenanteil an Wasser in der wässrigen Ascorbinsäurelösung von 5,7 Masse-%, bezogen auf die Gesamtmasse des für die Durchführung des erfindungsgemäßen Verfahrens zur Verfügung gestellten, Cr(VI) umfassenden Rohstoffs.

Das für die Durchführung des erfindungsgemäßen Verfahrens zur Verfügung gestellte Wasser lag ausschließlich als Bestandteil der wässrigen Ascorbinsäurelösung vor.

Zum Zusammenführen und Vermischen des Cr(VI) umfassenden Rohstoffs mit den Ascorbinsäuregranalien sowie der wässrigen Ascorbinsäurelösung wurden diese Komponenten in einen Trommelmischer eingegeben und durch Starten des Trommelmischers in diesem zusammengeführt und miteinander vermischt. Die Mischzeit im Trommelmischer betrug 15 Minuten.

Der nach dem Vermischen in dem Trommelmischer mit den Ascorbinsäuregranalien sowie der wässrigen Ascorbinsäurelösung vermischte, Cr(VI) umfassende Rohstoff wurde anschließend in einen Trommeltrockner eingegeben und dort bei einer Temperatur von 150°C für eine Dauer von etwa 1,5 Stunden getrocknet.

Der Feuchtigkeitsgehalt des Cr(VI) umfassenden Rohstoffs betrug nach dem Vermischen und vor der Trocknung etwa 5,7 Masse-%, bezogen auf die Gesamtmasse des Cr(VI) umfassenden Rohstoffs.

Nach dem Trocknen im Trommeltrockner betrug die Restfeuchte des Cr(VI) umfassenden Rohstoffs etwa 0,1 Masse-%, bezogen auf die Gesamtmasse des behandelten, Cr(VI) umfassenden Rohstoffs.

Während des Vermischens des Cr(VI) umfassenden Rohstoffes mit der Ascorbinsäure wurde der Anteil an Cr(VI) in dem Cr(VI) umfassenden Rohstoff durch die Ascorbinsäure weitgehend reduziert. Insgesamt konnte der Gehalt an Cr(VI) in dem Cr(VI) umfassenden Rohstoff von zunächst 4.000 ppm auf etwa 300 ppm in dem behandelten, Cr(VI) umfassenden Rohstoff reduziert werden.

Die Korngröße des für die Durchführung des Verfahrens zur Verfügung gestellte Cr(VI) umfassenden Rohstoffes wurde während der Durchführung des Verfahrens praktisch nicht verändert. Insoweit entsprach die Siebkurve des durch das Verfahren gemäß dem Ausführungsbeispiel behandelten, Cr(VI) umfassenden Rohstoffs der Siebkurve des für die Durchführung des Verfahrens ursprünglich zur Verfügung gestellten Rohstoffs.

Die chemische Zusammensetzung des durch das Verfahren gemäß dem Ausführungsbeispiel behandelten, Cr(VI) umfassenden Rohstoffs entsprach der chemischen Zusammensetzung des für das Verfahren gemäß dem Ausführungsbeispiel ursprünglich zur Verfügung gestellten, Cr(VI) umfassenden Rohstoffs

Der durch das Verfahren gemäß dem Ausführungsbeispiel behandelte, Cr(VI) umfassende Rohstoff wurde als Rohstoff zur Herstellung von feuerfesten keramischen Erzeugnissen zur Verfügung gestellt.

## Patentansprüche

1. Verfahren zur Herstellung eines Rohstoffes zur Herstellung von feuerfesten keramischen Erzeugnissen, das die folgenden Schritte umfasst:
1.1 Zur Verfügungstellung eines Cr(VI) umfassenden Rohstoffs;
1.2 zur Verfügungstellung von Ascorbinsäure;
1.3 zur Verfügungstellung von Wasser;
1.4 Zusammenführen des Cr(VI) umfassenden Rohstoffs mit der Ascorbinsäure und dem Wasser;
1.5 Vermischen des Cr(VI) umfassenden Rohstoffs mit der Ascorbinsäure und dem Wasser; **gekennzeichnet durch**
1.6 Trocknen des Cr(VI) umfassenden Rohstoffs; wobei
1.7 der zur Verfügung gestellte Cr(VI) umfassende Rohstoff zu wenigstens 50 Masse-% in einer Korngröße über 50 µm vorliegt und
1.8 das Verfahren derart durchgeführt wird, dass die Korngröße des Cr(VI) umfassenden Rohstoffs während der Durchführung des Verfahrens nicht oder nicht wesentlich verändert wird.

2. Verfahren nach Anspruch 1, bei dem der Cr(VI) umfassende Rohstoff in Form von gebrauchten feuerfesten keramischen Erzeugnissen zur Verfügung gestellt wird.

3. Verfahren nach wenigstens einem der vorhergehenden Ansprüche, bei dem der Cr(VI) umfassende Rohstoff mit einem Gehalt an Cr(VI) von wenigstens 500 ppm zur Verfügung gestellt wird.

4. Verfahren nach wenigstens einem der vorhergehenden Ansprüche, bei dem der Cr(VI) umfassende Rohstoff nach dem Trocknen einen Gehalt an Cr(VI) von unter 500 ppm aufweist.

5. Verfahren nach wenigstens einem der vorhergehenden Ansprüche, bei dem der Cr(VI) umfassende Rohstoff nach dem Trocknen als Rohstoff zur Herstellung von feuerfesten keramischen Erzeugnissen zur Verfügung gestellt wird.

6. Cr(VI) umfassender Rohstoff zur Herstellung von feuerfesten keramischen Erzeugnissen, umfassend
6.1 Cr₂O₃;
6.2 wenigstens eines der Oxide Al₂O₃ oder MgO; und
6.3 Cr(VI); wobei
6.4 der Gehalt an Cr(VI) in dem Rohstoff unter 500 ppm liegt,
6.5 der Feuchtigkeitsgehalt unter 1,5 % liegt, und
6.6 der Rohstoff zu wenigstens 50 Masse-% in einer Korngröße über 50 µm vorliegt;
**dadurch gekennzeichnet, dass** der Rohstoff ferner umfasst:
6.7 Oxalsäure.

## Claims

1. Method for producing a raw material for the production of refractory ceramic products that comprises the following steps: 1.1 provision of a raw material comprising Cr(VI);
1.2 provision of ascorbic acid;
1.3 provision of water;
1.4 combining of the raw material comprising Cr(VI) with the ascorbic acid and the water;
1.5 mixing of the raw material containing Cr(VI) with the ascorbic acid and the water; **characterized by**
1.6 drying of the raw material comprising Cr(VI); wherein
1.7 the provided raw material comprising Cr(VI) is present to at least 50% by weight in a particle size greater than 50 µm; and
1.8 the method is carried out such that the particle size of the raw material comprising Cr(VI) does not change or does not change significantly during the course of the method.

2. Method as claimed in claim 1, in which the raw material comprising Cr(VI) is provided in the form of used refractory ceramic products.

3. Method as claimed in at least one of the preceding claims, in which the raw material comprising Cr(VI) is provided with a content of Cr(VI) of at least 500 ppm.

4. Method as claimed in at least one of the preceding claims, in which after drying, the raw material comprising Cr(VI) has a content of Cr(VI) of less than 500 ppm.

5. Method as claimed in at least one of the preceding claims, in which after drying, the raw material comprising Cr(VI) is provided as a raw material for the production of refractory ceramic products.

6. Raw material comprising Cr(VI) for the production of refractory ceramic products, comprising
6.1 Cr₂O₃;
6.2 at least one of the oxides Al₂O₃ or MgO; and
6.3 Cr(VI); wherein
6.4 the content of Cr(VI) in the raw material is less than 500 ppm,
6.5 the moisture content is less than 1.5%, and
6.6 the raw material is present to at least 50% by weight in a particle size greater than 50 µm;
**characterized in that** the raw material further comprises:
6.7 oxalic acid.

## Revendications

1. Procédé, destiné à produire une matière première pour la fabrication de produits réfractaires en céramique, qui comprend les étapes suivantes consistant à :
1.1 mettre à disposition une matière première comprenant du Cr(VI) ;
1.2 mettre à disposition de l'acide ascorbique ;
1.3 mettre à disposition de l'eau ;
1.4 réunir la matière première contenant du Cr(VI) avec l'acide ascorbique et l'eau ;
1.5 mélanger la matière première contenant du Cr(VI) avec l'acide ascorbique et l'eau ; **caractérisé par**
1.6 le séchage de la matière première contenant du Cr(VI) ;
1.7 la matière première contenant du Cr(VI) mise à disposition se présentant au moins à raison de 50 % en masse avec une grosseur de grains supérieure à 50 µm et
1.8 le procédé étant réalisé de telle sorte que la grosseur de grains de la matière première contenant du Cr(VI) ne se modifie pas ou pas sensiblement pendant la réalisation du procédé.

2. Procédé selon la revendication 1, lors duquel on met à disposition la matière première contenant du Cr(VI) sous la forme de produits réfractaires en céramique utilisés.

3. Procédé selon au moins l'une quelconque des revendications précédentes, lors duquel on met à disposition la matière première contenant du Cr(VI) avec une teneur en Cr(VI) d'au moins 500 ppm.

4. Procédé selon au moins l'une quelconque des revendications précédentes, lors duquel, après le séchage, la matière première contenant du Cr(VI) présente une teneur en Cr(VI) inférieure à 500 ppm.

5. Procédé selon au moins l'une quelconque des revendications précédentes, lors duquel, après le séchage, on met à disposition la matière première contenant du Cr(VI) comme matière première destinée à la fabrication de produits réfractaires en céramique.

6. Matière première contenant du Cr(VI) destinée à la fabrication de produits réfractaires en céramique, comprenant
6.1 du Cr₂O₃ ;
6.2 au moins l'un des oxydes Al₂O₃ ou MgO ; et
6.3 du Cr(VI) ;
6.4 la teneur en Cr(VI) dans la matière première étant inférieure à 500 ppm,
6.5 le taux d'humidité étant inférieur à 1,5 %, et
6.6 la matière première se présentant au moins à raison de 50 % en masse avec une grosseur de grains supérieure à 50 µm ;
**caractérisée en ce que** la matière première comprend en outre :
6.7 de l'acide oxalique.
